# EUROPEAN PATENT APPLICATION

(11) **EP 4 838 397 A1**
(43) Date of publication of application: **11.11.2026**
(21) Application number: 26176495.5
(22) Date of filing: 05.05.2026
(51) Int. Cl.: G06F 21/71, G06F 21/75, G06F 21/55

(54) **SYSTEM AND METHOD OF REPURPOSING A DISABLED HARDWARE BLOCK OF A PROCESSING SYSTEM**

(30) Priority: 06.05.2025 US 202519200354
(71) Applicant: NXP B.V., 5656 AG Eindhoven (NL)
(72) Inventor: Veshchikov, Nikita, 5656AG Eindhoven (NL); Folwarczny, Artur, 5656AG Eindhoven (NL)
(74) Representative: Schwarzweller, Thomas

(57) **Abstract**

A processing system including a communication interface, a processor coupled to the communication interface, a hardware block coupled to the communication interface and configured to perform a primary function when enabled, and configuration circuitry configured to selectively disable the hardware block from performing the primary function and to selectively repurpose the hardware block to perform an alternative function that is different from the primary function. Switch circuitry may be provided for selectively decoupling the hardware block or selected signals from the hardware block, or for isolating a subcomponent of the hardware block, or a combination of both. A repurposing block may be included which, when enabled by the configuration circuitry, repurposes the hardware block to perform the alternative function that is different from the primary function. Alternative functions may include generation of noise or additional random numbers, fault detection, memory extension, use of a hardware block subfunction, etc.

## Description

### BACKGROUND

### FIELD

The present disclosure relates in general to processing systems, and more particularly to a system and method of repurposing a disabled hardware block of a processing system.

### DESCRIPTION OF THE RELATED ART

A processing system is a computer system with one or more processors, or one or more processing cores, or one or more central processing units (CPUs), etc., or a combination thereof. An example of a processing system is a microcontroller, also known as a microcontroller unit or MCU, which is typically incorporated on a single integrated circuit (IC) and often considered an embedded system. The processing system may also include memory, peripherals, input/output (I/O) devices, etc., in which the particular implementation or configuration depends upon the application. Processing system applications, including microcontrollers, may include, for example, industrial applications, automotive applications, commercial applications, etc.

Some hardware blocks of a processing system can become obsolete or deprecated for a variety of reasons, such as, for example, new standards or security issues. Such hardware blocks can be disabled to avoid their accidental or malicious use and to reduce the energy costs of the device. A hardware block can also be disabled because it performs an optional function that was not paid for in a licensing agreement when purchased.

### SUMMARY

According to a first aspect of the present disclosure, there is provided a processing system, comprising: a communication interface; a processor coupled to the communication interface; a hardware block coupled to the communication interface and configured to perform a primary function when enabled; and configuration circuitry configured to selectively disable the hardware block from performing the primary function and to selectively repurpose the hardware block to perform an alternative function that is different from the primary function.

In one or more embodiments, the processing system further comprises switch circuitry controlled by the configuration circuitry for selectively decoupling the hardware block from the communication interface.

In one or more embodiments the switch circuitry selectively blocks at least one of input signals and output signals between the hardware block and the communication interface.

In one or more embodiments the hardware block comprises at least one memory-mapped register; and the processor is configured to use the at least one memory-mapped register of the hardware block when the hardware block is disabled from the primary function and repurposed for memory extension.

In one or more embodiments, the processing system further comprises a repurposing block coupled to the communication interface and the hardware block and configured, when enabled by the configuration circuitry, to repurpose the hardware block to perform the alternative function that is different from the primary function.

In one or more embodiments, the repurposing block is configured to periodically provide a selected input value to the input of the hardware block, to receive a corresponding output value from the hardware block, to compare the received output value with a predetermined output value, and to generate an alert when the received output value is not equal to the predetermined output value.

In one or more embodiments, repurposing block is configured to generate the alert by sending an interrupt to the processor.

In one or more embodiments, the processing system further comprises a random number generator providing random numbers; and wherein the repurposing block is configured to redirect the random numbers from the random number generator to an input of the hardware block which processes the random numbers for generating noise.

In one or more embodiments, the processing system further comprises a random number generator providing random numbers; and wherein the repurposing block is configured to redirect the random numbers from the random number generator to the hardware block which generates additional random numbers for use by the processor.

In one or more embodiments, the hardware block comprises subfunction circuitry; andwherein the repurposing block is configured to provide inputs to the subfunction circuitry and to receive outputs from the subfunction circuitry.

In one or more embodiments, the hardware block further comprises switch circuitry configured to isolate the subfunction circuitry by redirecting the inputs from the repurposing block to the subfunction circuitry and by providing the outputs from the subfunction circuitry to the repurposing block.

In one or more embodiments, the processing system further comprises switch circuitry controlled by the configuration circuitry for selectively redirecting input and output signals between the hardware block and the repurposing block.

According to a second aspect of the present disclosure, there is provided a method of repurposing a hardware block of a processing system, wherein the processing system includes a communication interface coupled to a processor, and wherein the hardware block is coupled to the communication interface and configured to perform a primary function when enabled, the method comprising: selectively disabling the hardware block from performing the primary function; and selectively repurposing the hardware block, when disabled from performing the primary function, to perform an alternative function that is different from the primary function.

In one or more embodiments, the repurposing comprises using, by the processor, at least one memory-mapped register of the hardware block when the hardware block is disabled from performing the primary function.

In one or more embodiments, the repurposing comprises: periodically providing a selected input value to the input of the hardware block; receiving an output value from the hardware block that corresponds with the selected input value; comparing the received output value with a predetermined output value; and generating an alert to the processor when the received output value is not equal to the predetermined output value.

In one or more embodiments, the repurposing comprises: generating noise by redirecting random numbers from a random number generator to an input of the hardware block which processes the random numbers.

In one or more embodiments, the repurposing comprises: generating additional random numbers for use by the processor by redirecting random numbers from a random number generator to the hardware block which processes the received random numbers for generating the additional random numbers.

In one or more embodiments, the repurposing comprises: using a subfunction of the disabled hardware block by providing inputs to the subfunction and receiving outputs from the subfunction.

In one or more embodiments, the selectively disabling the hardware block comprises programming configuration circuitry to prevent the processor upon power up from using the hardware block for performing the primary function during operation.

In one or more embodiments, the selectively disabling the hardware block comprises selectively blocking or otherwise redirecting signals of the hardware block.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a processing system configured for repurposing one or more disabled hardware blocks of a set of N hardware blocks according to one embodiment.
FIG. 2 is a simplified block diagram of the processing system of FIG. 1 illustrating repurposing a hardware block 2 according to one embodiment.
FIG. 3 is a simplified block diagram of the processing system of FIG. 1 illustrating repurposing a hardware block 3 into a noise generator according to one embodiment.
FIG. 4 is a simplified block diagram of the processing system of FIG. 1 illustrating repurposing a hardware block 4 using a repurposing block 4 into a random number generator according to another embodiment.
FIG. 5 is a simplified block diagram of the processing system of FIG. 1 illustrating repurposing the hardware block 4 using the repurposing block 4 into a random number generator according to yet another embodiment.
FIG. 6 is a simplified block diagram of the processing system of FIG. 1 illustrating repurposing a hardware block 6 using a repurposing block 6 into a fault detector according to one embodiment.
FIG. 7 is a simplified block diagram of the processing system of FIG. 1 illustrating repurposing a hardware block 7 for extending memory according to another embodiment.
FIG. 8 is a simplified block diagram of the processing system of FIG. 1 illustrating repurposing subfunction of a hardware block 8 using a repurposing block 8 according to another embodiment.

### DETAILED DESCRIPTION

A system and method of repurposing an otherwise disabled hardware block of a processing system for performing an alternative function that is useful in the processing system. The processing system includes a communication interface, a processor coupled to the communication interface, a hardware block coupled to the communication interface and configured to perform a primary function when enabled, and configuration circuitry configured to selectively disable the hardware block from performing the primary function and to selectively repurpose the hardware block to perform an alternative function that is different from the primary function. Switch circuitry may be included to selectively decouple the hardware block from the communication interface or for redirecting at least one of input and output signals of the hardware block. Alternative functions may include generation of noise or additional random numbers, fault detection, memory extension, use of a hardware block subfunction, etc.

The processor may be configured to use at least one memory-mapped register of the hardware block when the hardware block is disabled. The processing system may further include a repurposing block that is configured, when enabled and while the hardware block is disabled, to repurpose the hardware block to perform the alternative function that is different from the primary function.

The repurposing block may be configured to periodically provide a selected input value to the input of the hardware block, to receive a corresponding output value from the hardware block, to compare the received output value with a predetermined output value, and to generate an alert when the received output value is not equal to the predetermined output value. The processing system may further include a random number generator providing random numbers, in which the repurposing block may be configured to redirect the random numbers from the random number generator to an input of the hardware block which processes the random numbers for generating noise. The repurposing block may be configured to redirect true random numbers from the random number generator to the hardware block which generates additional random numbers for use by the processor.

The hardware block may include subfunction circuitry, and the repurposing block may be configured to provide inputs to the subfunction circuitry and to receive outputs from the subfunction circuitry. The hardware block may further include switch circuitry configured to isolate the subfunction circuitry by redirecting the inputs from the repurposing block to the subfunction circuitry and by providing the outputs from the subfunction circuitry to the repurposing block. The switch circuitry may be controlled to selectively redirect at least one of input and output signals between the hardware block and the repurposing block.

A method of repurposing a hardware block of a processing system according to one embodiment may include selectively disabling the hardware block from performing the primary function, and selectively repurposing the hardware block, when disabled from performing the primary function, to perform an alternative function that is different from the primary function. The method may include using, by the processor, at least one memory-mapped register of the hardware block when the hardware block is disabled from performing the primary function. The method may include periodically providing a selected input value to the input of the hardware block, receiving an output value from the hardware block that corresponds with the selected input value, comparing the received output value with a predetermined output value, and generating an alert to the processor when the received output value is not equal to the predetermined output value. The method may include generating additional random numbers for use by the processor by redirecting random numbers from a random number generator to the hardware block which processes the received random numbers for generating the additional random numbers. The method may include using a subfunction of the disabled hardware block by providing inputs to the subfunction and receiving outputs from the subfunction. The method may include programming configuration circuitry to prevent the processor upon power up from using the hardware block for performing the primary function during operation. The method may include selectively disabling the hardware block comprises selectively blocking or otherwise redirecting signals of the hardware block.

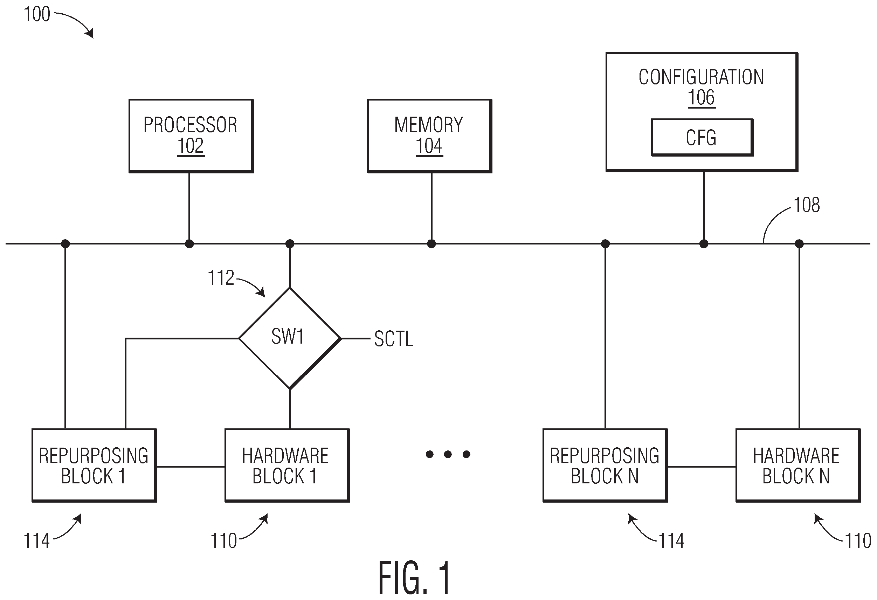

FIG. 1 is a simplified block diagram of a processing system 100 configured for repurposing one or more disabled hardware blocks of a set of N hardware blocks according to one embodiment. The processing system 100 may be implemented on a single semiconductor chip or integrated circuit (IC), such as a system-on-chip (SoC) or microcontroller unit (MCU) or the like. The illustrated processing system 100 includes a processor 102, memory 104, and configuration circuitry 106, each coupled to a communication interface 108. The processing system 100 includes N hardware blocks 110, individually labeled hardware block 1, ..., hardware block N, in which N is at least one. Each of the hardware blocks is coupled to the communication interface 108, either directly or through switch circuitry 112 as further described herein. The switch circuitry 112 is controlled by switch control (SCTL) signals and may include individual switch circuits, such as a switch circuit SW1 for the hardware block 1. As shown, for example, hardware block 1 is coupled to the communication interface 108 through the switch circuit SW1 whereas hardware block N is directly coupled to the communication interface 108. The processing system 100 may further include one or more repurposing blocks 114, individually labeled repurposing block 1, ..., repurposing block N, each provided for and coupled to a corresponding one of the hardware blocks 110 and each coupled to the communication interface 108. Although a repurposing block 114 is shown for both of the hardware blocks 1 and N (e.g., repurposing block 1 and N, respectively), one or more of the hardware blocks 110 may not include a corresponding repurposing block 114 even if any of those one or more hardware blocks 110 may be disabled as further described herein.

The processor 102 generally represents any type of processing unit, such as a processing core, a central processing unit (CPU), a microprocessor, etc. Although only one processor 102 is shown, is it noted that the processing system 100 may include any number of processing devices, such as multiple cores, multiple CPUs, multiple microprocessors, etc. The memory 103 includes any combination of memory devices, such as random-access memory (RAM), read-only memory (ROM) suitable for the particular application. The configuration circuitry 106 may include configuration files, configuration registers and other configuration circuitry for configuring the processing system 100 for operation. In one embodiment, for example, the processor 102, upon power-on restart or reset (POR), accesses and executes boot firmware stored in the memory 104 which accesses a configuration (CFG) file provided or otherwise accessible by the configuration circuitry 106 for configuring the processing system 100. Such configuration may include enabling or disabling selected ones of the hardware blocks 110, selectively enabling or disabling corresponding ones of the repurposing blocks 114, and controlling the SCTL signals for controlling the switch circuitry 112. It is noted that the boot firmware may be periodically updated and the configuration circuitry 106 facilitates hardware and software updates and other changes over time. The communication interface 108 enables communication between the processor 102, the memory 104, and the other various functional blocks and circuitry of the processing system 100 and may be configured as a bus system or switching network or the like.

Each of the hardware blocks 110 may be configured in any suitable format, such as an accelerator or the like, to perform a corresponding function of the processing system 100 depending upon the particular application. Exemplary functions include graphics, audio processing, signal processing, machine learning, cryptography, mathematics, etc. Some hardware blocks may be configured to perform an optional function that may or may not be used by a buyer of the processing system 100. In one embodiment, switch circuitry 112 may be included for any such optional hardware blocks, such as SW1 for the hardware block 1, for example, in which the input signals to the hardware block 1, or the output signals from the hardware block 1, or both may be disconnected from the communication interface 108 to effectively disable the hardware block 1 from being accessed by the processor 102 or other normal operational circuitry during operation. The SCTL signals may be used to control the switch circuitry 112 to control input and output signals of the hardware block 1. The switch circuitry 112 may be configured in any suitable manner, such as one or more fuses or the like or mechanical switches or other components that are burned or otherwise manipulated by laser or X-ray to toggle individual switches of the switch circuitry 112. Alternatively, the switch circuitry 112 may be controlled by a configuration register or the like within or otherwise controlled by the configuration circuitry 106.

The switch circuitry 112 may include a separate switch circuit for any one or more of the hardware blocks 110 that may have a repurposing function in which it may be desired to decouple or otherwise disconnect inputs or outputs or both from the communication interface 108 or to disconnect an interrupt signal from the processing 102. When a switch circuit is provided for a corresponding hardware block (e.g., switch circuit SW1 for the hardware block 1), the switch circuit is controlled (e.g., by the SCTL signals or the like) to facilitate either enabling or disabling the corresponding hardware block. When a hardware block is enabled, then the corresponding switch circuit may be controlled to connect the input and output signals of that hardware block to the communication interface 108 for enabling normal operations. When that hardware block is disabled, however, then the corresponding switch circuit may be controlled to disconnect either one or both of the inputs and the outputs of the hardware block from the communication interface 108. If the disabled hardware block normally generates an interrupt signal to the processor 102, then the corresponding switch circuit may be used to block the interrupt signal from being provided to the processor 102. If a repurposing block is provided for the disabled hardware block (e.g., repurposing block 1 for the hardware block 1), then the switch circuit may also be controlled to redirect either one or both of the input and the output signals to and from the corresponding repurposing block for repurposing the hardware block as further described herein.

In addition, or in the alternative, the configuration circuitry 106 may be configured to selectively disable one or more of the hardware blocks 110 from performing their primary functions during operation of the processing system 100. When provided, the configuration circuitry 106 may also selectively enable the corresponding repurposing block 114 to facilitate repurposing the disabled hardware block 110 as further described herein. Any of the hardware blocks 110 may be disabled for other reasons, such as when a hardware block 110 becomes obsolete or deprecated for other reasons, such as because of new standards or security issues or discovery of operating issues or bugs and the like. Any of the hardware blocks 110 can be disabled to avoid their accidental or malicious use and to reduce the energy costs of the device. Some of the hardware blocks 110, such as the hardware block N, for example, may not include switch circuitry 112, but may still be disabled by operation of the configuration circuitry 106 during an update or the like. Also, one or more of the hardware blocks may include internal switches for internally redirecting signals within the hardware block when disabled from its primary function and repurposed for another function. In many cases a hardware block may be disabled to reduce power consumption of the processing system 100, or otherwise to prevent accidental or even malicious use.

When the primary function of any of the hardware blocks 110 is not used, is no longer needed, and the hardware block is not to be repurposed, then the circuitry of the hardware block may be completely disabled in its entirety to minimize power consumption. As described herein, however, a hardware block 110 that is disabled in terms of its primary function may instead be repurposed for an alternative function that is different from the primary function yet useful for the processing system 100. For the embodiments described herein, the configuration circuitry 106 is used as the primary enabling or disabling function for each of the hardware blocks 110. As previously described, for example, upon POR, the processor 102 executes boot firmware or the like which accesses the configuration circuitry 106 (which may include a CFG configuration file or the like) for configuring the processing system 100 including selectively enabling or disabling each of the hardware blocks 110, selectively enabling or disabling corresponding ones of the repurposing blocks 114, and controlling the switch circuitry 112. Such enabling/disabling may be achieved, for example, by setting/clearing bits of one or more configuration registers or the like. The configuration circuitry 106, for example, is used to disable a hardware block 110 from being used by the processor 102 or other system circuitry for its primary function, but the circuitry of the hardware block may otherwise remain active for use as an alternative function as further described herein. Some alternative functionalities of a "disabled" hardware block 110 may include, for example, a noise generator, a fault detector, and a random number generator. When the disabled hardware block 110 includes memory-mapped registers, such registers may be used by the processor 102 to extend the memory space available to the processor 102. When the disabled hardware block 110 includes one or more useful subfunctions, such subfunctions may also be reused for alternative functions useful for the processing system 100.

A corresponding one of the repurposing blocks 114 may be provided for each hardware block 110 that may have at least one alternative use or that may be used for an alternative function when the primary function of that hardware block 110 is disabled. The repurposing block 1 is provided and enabled for repurposing the hardware block 1 if and when the primary function of the hardware block 1 is disabled, and the repurposing block N is provided and enabled for repurposing the hardware block N if and when the primary function of the hardware block N is disabled. The repurposing blocks 1 and N may be enabled by the configuration circuitry 106 and may include one or more enable signals (not shown). In general, a repurposing block may be provided for any hardware block in the processing system 100 that may have or that may otherwise be used for an alternative function that is deemed useful, in which the provided repurposing block is enabled for repurposing the disabled hardware block as further described herein. Many of the repurposing blocks 114 may initially be disabled while the corresponding hardware blocks 110 are initially enabled to perform their primary functions. Some of the repurposing blocks 114 may initially be enabled while the corresponding hardware blocks 110 are disabled when the primary functions of those hardware blocks 110 are not needed or otherwise not intended to be used.

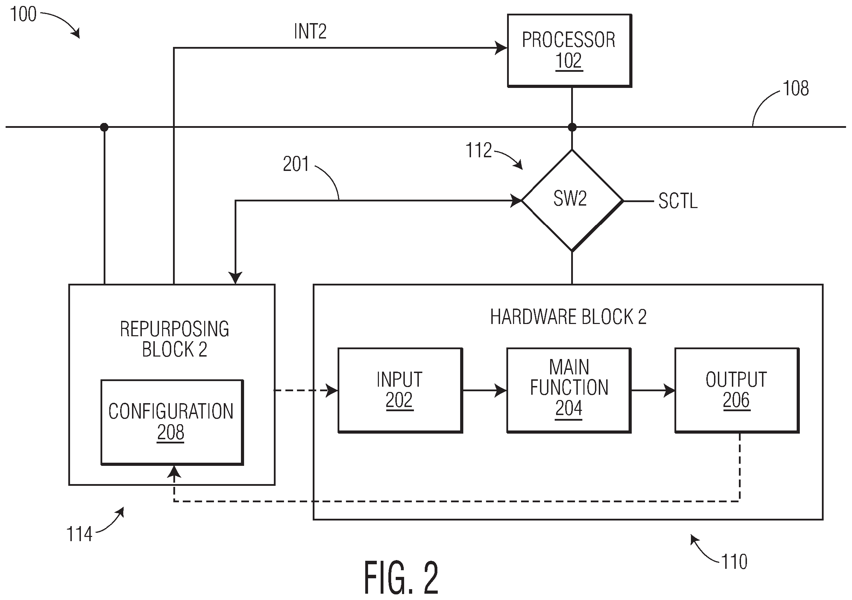

FIG. 2 is a simplified block diagram of the processing system 100 illustrating repurposing a hardware block 2 according to one embodiment. If included, the hardware block 2 is one of the hardware blocks 110 and a repurposing block 2 is one of the repurposing blocks 114. Although not specifically shown in FIG. 2, the hardware block 2 has been disabled for its primary function and the repurposing block 2 has been enabled using the configuration circuitry 106 or the like. The input and output signals of the hardware block 2 are redirected from the communication interface 108 to the repurposing block 2 as illustrated by double-arrow line 201 using a switch circuit SW2, which is an applicable portion of the switch circuitry 112. As shown, the hardware block 2 includes input circuitry 202, main function circuitry 204, and output circuitry 206, which are interfaced with the processor 102 during normal operation if and when the hardware block 2 is used for its primary function.

When the primary function of the hardware block 2 is disabled, the repurposing block 2 provides input signals to the input circuitry 202 via SW2 and receives output signals from the output circuitry 206 of the hardware block 2 via SW2 for performing the alternative function as determined by the repurposing block 2. It is noted that a dashed line is shown from the repurposing block 2 directly to the input circuitry 202 of the hardware block 2 and another dashed line is shown from the output circuitry 206 of the hardware block 2 directly to the repurposing block 2. These dashed input and output lines represent input and output signals, respectively, actually flowing through SW2 when configured to redirect both input and output signals. In addition, the repurposing block 2 may, upon occurrence of predetermined conditions or events, assert an interrupt signal INT2 to the processor 102, which, in response to the interrupt, runs a corresponding interrupt routine for the repurposing block 2.

The repurposing configuration shown in FIG. 2 illustrates a general case in which the repurposing block 2 may be implemented or otherwise configured for repurposing the hardware block 2 for the alternative purpose or function. As shown, for example, the repurposing block 2 may include configuration circuitry 208 that is configured or otherwise programmed by other circuitry or by the processor 102 via firmware or software or the like for performing the alternative function. The alternative function may be determined beforehand in which the repurposing block 2 is preconfigured for the predetermined alternative function. In the alternative, the configuration circuitry 208 may be programmed for performing any one of one or more predetermined alternative functions.

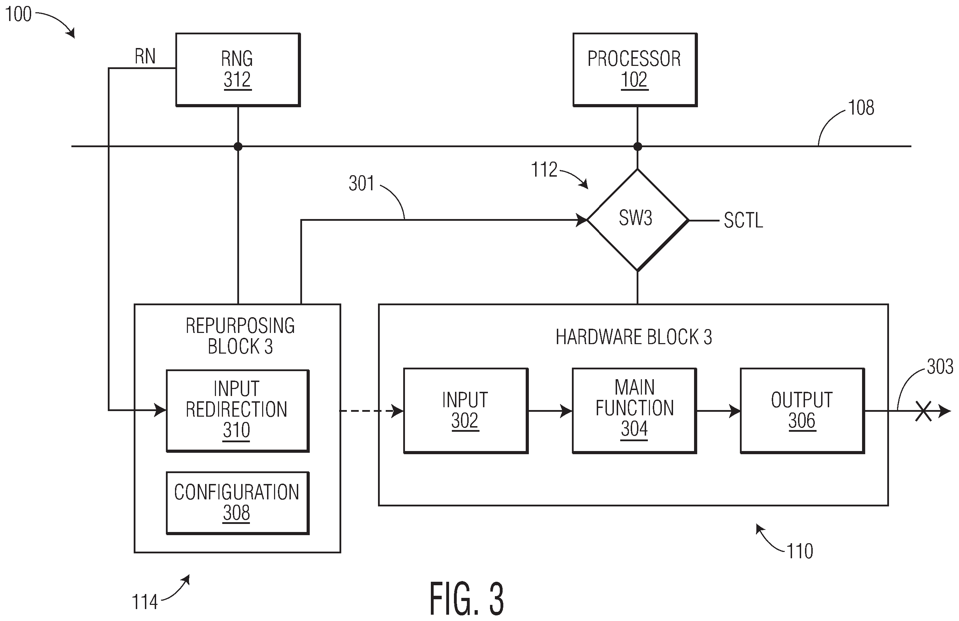

FIG. 3 is a simplified block diagram of the processing system 100 illustrating repurposing a hardware block 3 into a noise generator according to one embodiment. If included, the hardware block 3 is one of the hardware blocks 110 and a repurposing block 3 is one of the repurposing blocks 114. Although not specifically shown in FIG. 3, the primary function of the hardware block 3 is disabled and the repurposing block 3 is enabled using the configuration circuitry 106 or the like. A switch circuit SW3 is provided to redirect input signals from the repurposing block 3 rather than from the communication interface 108 as illustrated by single-arrow line 301, and to block output signals from the hardware block 3 from being provided to the communication interface 108 as indicated by a line 303 with blocking symbol "X". SW3 is an applicable portion of the switch circuitry 112 for the hardware block 3. As shown, the hardware block 3 includes input circuitry 302, main function circuitry 304, and output circuitry 306 in which the output signals from the output circuitry 306 are blocked from the communication interface 108. The repurposing block 3 includes configuration circuitry 308 and input redirection circuitry 310.

The processing system 100 further includes a random number generator (RNG) 312 coupled to the communication interface 108, which has an output for providing random numbers (RN). The random numbers RN are provided directly to the repurposing block 3. The repurposing block 3 is configured so that the random numbers RN are redirected by the input redirection circuitry 310 and SW3 to the input circuitry 302 of the hardware block 3, which processes the random numbers RN using the main function circuitry 304 for generating corresponding random output numbers via its output circuitry 306. In the embodiment shown, the output signals of the output circuitry 306 are blocked and not fed back to the communication interface 108 or the repurposing block 3.

Side channel attacks (SCAs) are attacks against devices, such as the processing system 100, which try to extract secret values manipulated in devices by using some physical characteristics such as power consumption or electro-magnetic emissions from the processing system 100. In this case, the hardware block 3, though purporting to perform its primary function, is actually performing an alternative function of generating electromagnetic noise by computing something using the main function circuitry 304 or the like for consuming more energy. In this manner, the hardware block 3 is repurposed to generate noise while the processing system 100 is using a secret value such as a security token or the like. Such noise generation can mitigate the potential for success of SCAs and similar types of attacks. Although not specifically shown, the repurposing block 3 may be configured to detect when the processor 102 or other system circuitry is using the security token so that the hardware block 3 is only used to generate noise while the security token is being used.

The RNG 312 may be configured in any suitable manner, such as a true RNG, as a deterministic RNG, or as any other suitable type of RNG. A true RNG uses "real" random processes that are governed by the laws of physics in which the generated random numbers are unpredictable. A deterministic RNG is based on an algorithm or the like in which the next random number is usually computed using one or more previous random numbers. A deterministic RNG usually generates pseudo-random numbers. A true RNG may be more complex or costly and is often used for security-related functions. A deterministic RNG may or may not be secure. A secure deterministic RNG uses special algorithms such as stream ciphers, block ciphers or hash functions to create random numbers based on an initial value called a seed. The RNG 312 shown in FIG. 3 may be configured as a deterministic RNG which may or may not be secure since only used to repurpose the hardware block 3 as a noise generator.

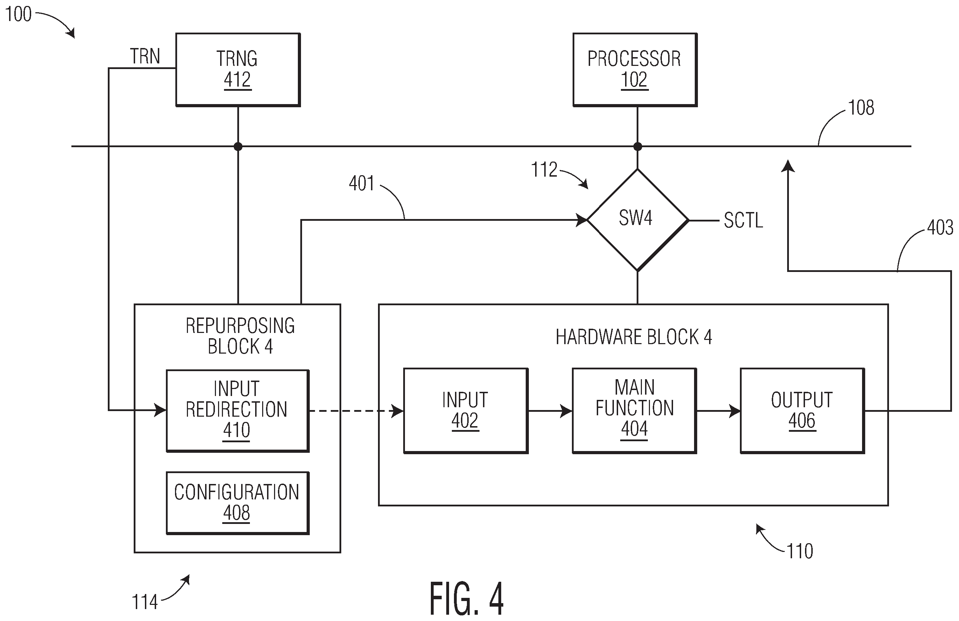

FIG. 4 is a simplified block diagram of the processing system 100 illustrating repurposing a hardware block 4 into a random number generator according to another embodiment. If included, the hardware block 4 is one of the hardware blocks 110 and the repurposing block 4 is one of the repurposing blocks 114. Although not specifically shown in FIG. 4, the hardware block 4 is disabled for performing its primary function (at least from the perspective of the processor 102) and the repurposing block 4 is enabled using the configuration circuitry 106 or the like. A switch circuit SW4 is provided to redirect input signals from the repurposing block 4 rather than from the communication interface 108 as illustrated by single-arrow line 401, but to otherwise pass output signals from the hardware block 4 to the communication interface 108 as indicated by a line 403. SW4 is an applicable portion of the switch circuitry 112 for the hardware block 3. As shown, the hardware block 4 includes input circuitry 402, main function circuitry 404, and output circuitry 406, and the repurposing block 4 includes configuration circuitry 408 and input redirection circuitry 410, substantially similar to that shown in FIG. 3.

The processing system 100 further includes a true random number generator (TRNG) 412 coupled to the communication interface 108, which has an output for providing true random numbers (TRN). The true random numbers TRN may be provided directly to the repurposing block 4 as shown. The repurposing block 4 is configured via its configuration circuitry 408 so that the true random numbers TRN are redirected via the input redirection circuitry 410 to the input circuitry 402 of the hardware block 4 via SW4, which processes the random numbers TRN using the main function circuitry 404 to generate additional random numbers via its output circuitry 406 to effectively increase the overall rate of random numbers being provided. In the embodiment shown, the output signals of the output circuitry 406 are provided to the communication interface 108 and thus available for consumption by the processor 102. In this case, therefore, even though the hardware block 4 is effectively disabled in terms of not being used by the processor 102 for its primary function, it is repurposed to generate additional random numbers for use by the processor 102.

Many applications, for example, may require a significant number of random numbers but many random number generators are not able to deliver them quickly enough. Functions such as ciphers or hash functions are often used to generate more random numbers per unit time than a standalone random number generator could use to produce random numbers with specific statistical qualities (mostly make them less predictable and more uniform). Some hardware blocks, such as the hardware block 4, that might otherwise be disabled, can instead be repurposed to generate more random numbers to thereby increase the overall rate of random number generation. As shown, the repurposing block 4 has been configured to redirect true random numbers TRN from the TRNG 412 to the hardware block 4 to generate even more random numbers for use by the processor 102.

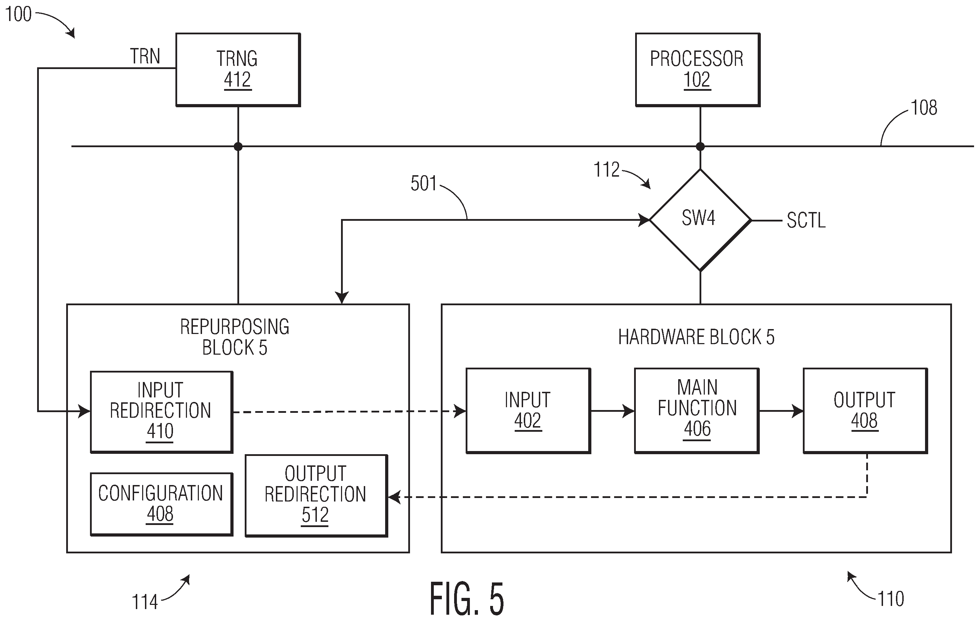

FIG. 5 is a simplified block diagram of the processing system 100 illustrating repurposing the hardware block 4 using the repurposing block 4 into a random number generator according to yet another embodiment. The processing system 100 shown in FIG. 5 is substantially similar to that shown in FIG. 4 in which the hardware block 4 includes the input circuitry 402, the main function circuitry 404, and the output circuitry 406, and the repurposing block 4 includes the configuration circuitry 408 and the input redirection circuitry 410 which operate in substantially similar manner as shown and described in FIG. 4. Again, although not specifically shown in FIG. 5, the hardware block 4 is disabled for performing its primary function (at least from the perspective of the processor 102) and the repurposing block 4 is enabled using the configuration circuitry 106 or the like. In addition, the processing system 100 includes the TRNG 412 coupled to the communication interface 108 providing the true random numbers TRN to the repurposing block 4. Also, the repurposing block 4 is enabled and configured via its configuration circuitry 408 so that the random numbers TRN are redirected via the input redirection circuitry 410 to the input circuitry 402 of the hardware block 4, which processes the random numbers TRN using the main function circuitry 404 to generate even more random numbers provided via its output circuitry 406.

In contrast to that shown in FIG. 4, however, the switch circuit SW4 redirects both input and output signals to and from the repurposing block 4 as indicated by double-arrow line 501. In this manner, the output signals of the output circuitry 406 are fed back through SW4 back to output redirection circuitry 512 of the repurposing block 4, which forwards the additional random numbers to the processor 102 via the communication interface 108. In this case, the additional random numbers generated by the hardware block 4 are not provided directly to the processor 102. Instead, the additional random numbers generated by the hardware block 4 are simply redirected from the hardware block 4 to the processor 102 via the output redirection circuitry 512 of the repurposing block 4.

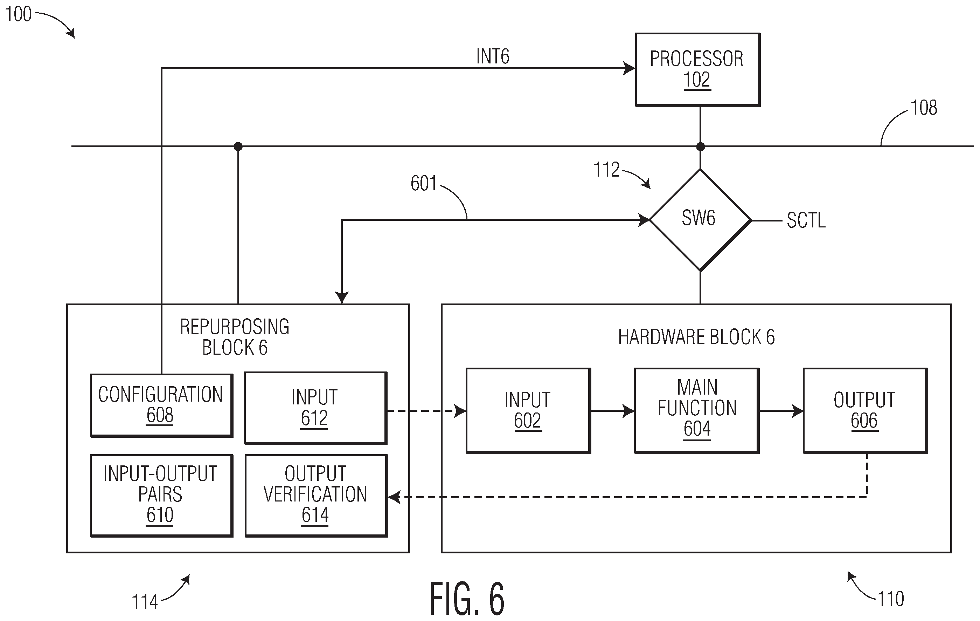

FIG. 6 is a simplified block diagram of the processing system 100 illustrating repurposing a hardware block 6 using a repurposing block 6 into a fault detector according to one embodiment. If included, the hardware block 6 is one of the hardware blocks 110 and the repurposing block 6 is one of the repurposing blocks 114. Although not specifically shown in FIG. 6, the primary function of the hardware block 6 is disabled and the repurposing block 6 is enabled using the configuration circuitry 106 or the like. A switch circuit SW6 redirects input and output signals of the hardware block 6 to and from the repurposing block 6 as indicated by double-arrow line 601. SW6 is an applicable portion of the switch circuitry 112 for the hardware block 6. As shown, the hardware block 6 includes input circuitry 602, main function circuitry 604, and output circuitry 606, and the repurposing block 6 includes configuration circuitry 608. In this case, the repurposing block 6 further includes a memory 610 storing known input-output pairs of the hardware block 6 when used for its primary function, input circuitry 612, and output verification circuitry 614.

The repurposing block 6 is enabled while the hardware block 6 is disabled at least in terms of performing its primary function for use by the processor 102. In operation, the repurposing block 6 periodically, or continuously, selects one of the input-output pairs from the memory 610 and provides the corresponding input to the input circuitry 602 of the hardware block 6 through SW6. The main function circuitry 604 of the hardware block 6 performs its function using the input received and provides a corresponding output to the output circuitry 606, which forwards the generated output to the output verification circuitry 614 of the repurposing block 6 through SW6. The output verification circuitry 614 compares the received output from the hardware block 6 with the corresponding output of the input-output pair selected by the input circuitry 612 for the current cycle. If the output from the selected input-output pair matches, then operation is considered successful. If the outputs do not match, however, then a fault is detected.

Fault injections (FIs) are among strongest physical attacks against embedded devices, such as the processing system 100. The method of an FI attack is to induce a fault during a computation to make the device use a wrong value to bypass its security mechanisms. It can also be used to skip instructions for the same purpose. Moreover, this approach can be used to extract secrets such as encryption keys from a device, such as the processing system 100. Two of the simplest ways to induce a fault in a device are to increase its clock frequency or to suddenly drop the power supply for a short period of time, or some combination of both. In any of these cases, some parts of the circuitry in the processing system 100 may not have enough time to finish a computation and thus may induce a faulty output including, for example, the hardware block 6.

In this case, the hardware block 6, though supposedly performing its primary function, is actually performing an alternative function of detecting an attack, such as an FI attack. The repurposing block 6 uses the repurposed hardware block 6 to potentially detect such attacks in which the hardware block 6 performs its function using well-known input and output pairs stored in the memory 610 of the repurposing block 6. The hardware block 6, when performing its function using a known input, requires a certain amount of processing time to generate a corresponding output such that even a small change in clock frequency or supply voltage or both likely results in a fault detected at the output. If the received output is not equal to the expected output, then an attack has been detected; otherwise, no attack is detected. In case of an attack detection, the repurposing block 6 can perform any one of several different functions, such as raising an exception or an alert or the like. As shown in FIG. 6, the repurposing block 6 may be configured to generate an interrupt signal INT6 to the processing 106 to inform the processor 102 of a detected attack.

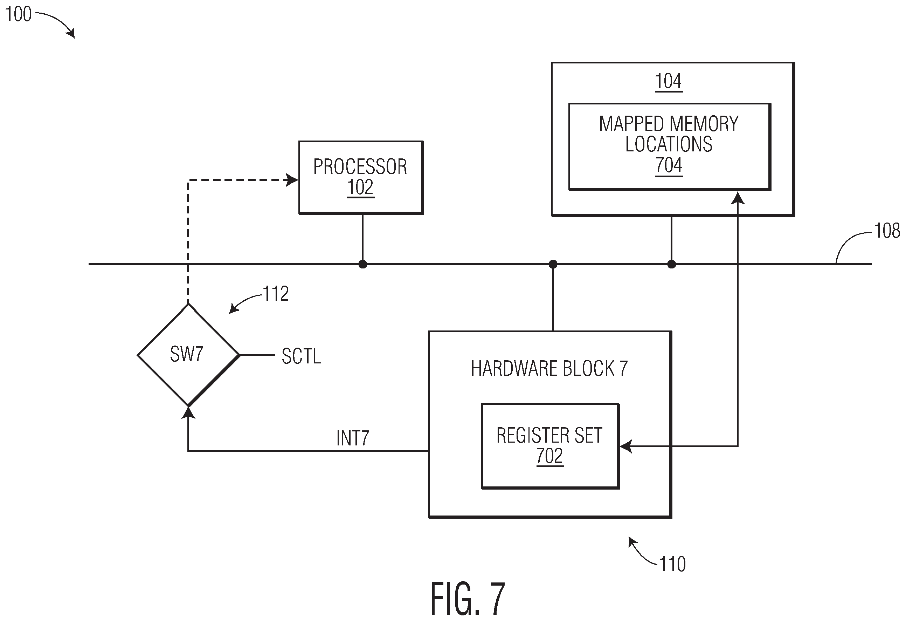

FIG. 7 is a simplified block diagram of the processing system 100 illustrating repurposing a hardware block 7 for extending memory according to another embodiment. If included, the hardware block 7 is one of the hardware blocks 110. Although not specifically shown in FIG. 7, the hardware block 7 has been disabled for performing its primary function, such as by the configuration circuitry 106 as previously described. In this case, the hardware block 7 includes a register set 702 including one or more registers that are mapped to corresponding mapped memory locations 704 of the memory 104 and thus accessible by the processor 102. In this manner, the hardware block 7 is repurposed by enabling the processor 102 to use the registers of the register set 702 to extend the available memory space.

The additional memory of the hardware block 7 typically does not behave differently from other portions of the main RAM memory devices of the memory 104. Utilizing the additional one or more registers in this way has no adverse effects on system operation, since the hardware block 7 is effectively disabled. Depending on the specific configuration of the hardware block 7, however, there may be the possibility of errors being triggered. In a first case, such errors can be written to an error register in the hardware block 7, which has no adverse effect on the processor 100 system since the hardware block 7 has otherwise been effectively disabled. In a second case, such errors can trigger an interrupt to the processor 102, such as by generating an interrupt signal INT7. If so, then a switch circuit SW7, which is a portion of the switch circuitry 112, may be provided for the hardware block 7 and controlled to disable the interrupt signal INT7 (e.g., by blocking it from being received by the processor 102).

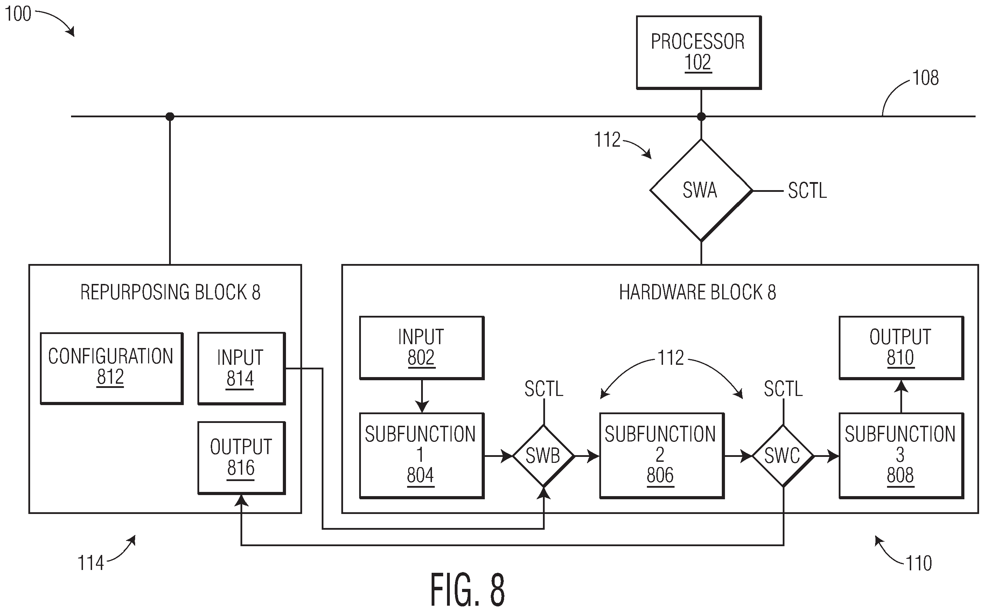

FIG. 8 is a simplified block diagram of the processing system 100 illustrating repurposing a subfunction of a hardware block 8 using a repurposing block 8 according to another embodiment. If included, the hardware block 8 is one of the hardware blocks 110 and the repurposing block 8 is one of the repurposing blocks 114. Although not specifically shown in FIG. 8, the hardware block 8 is disabled for its primary function and the hardware block 8 is enabled using the configuration circuitry 106 or the like. The input and output signals of the hardware block 8 are disconnected or otherwise blocked from the communication interface 108 using a first switch circuit SW8, which is an applicable portion of the switch circuitry 112. As shown, the hardware block 8 includes input circuitry 802, subfunction 1 circuitry 804, subfunction 2 circuitry 806, subfunction 3 circuitry 808, and output circuitry 810, which are interfaced with the processor 102 during normal operation when the hardware block 8 is used for its primary function. The repurposing block 8 includes configuration circuitry 812, input circuitry 814, and output circuitry 816.

During normal operation, SWA is controlled to forward input signals from the communication interface 108 to the input circuitry 802, which outputs signals to the subfunction 1 circuitry 804 for performing subfunction 1, which outputs signals to the subfunction 2 circuitry 806 for performing the subfunction 2, which outputs signals to the subfunction 3 circuitry 808 for performing the subfunction 3, which outputs signal to the output circuitry 810, which outputs signals to the communication interface 108 via SWA. In this case, the switch circuitry 112 may further include switch circuit SWB interposed between the subfunction 1 circuitry 804 and switch circuit SWC interposed between the subfunction 2 circuitry 806 and the subfunction 3 808. SWB may be controlled to provide signals from the input circuitry 814 of the repurposing block 8 to inputs of the subfunction 2 circuitry 806 rather than from the subfunction 1 circuitry 804, and SWC may be controlled to provide signals output from the subfunction 2 circuitry 806 to the output circuitry 816 of the repurposing block 8.

In general, if one of the hardware blocks 110, such as the hardware block 8, has a subfunction, such as the function of the subfunction 2 circuitry 806, that can be used on its own without the other parts of the computation and can be useful by itself for the processing system 100, then the repurposing block 8 and the switch circuitry 112 may be used to bypass other portions of the hardware block 8 for isolating and using the useful subfunction. As shown, for example, when the primary function of the hardware block 8 is disabled and the repurposing block 8 is enabled, the input circuitry 814 of the repurposing block 8 provides input signals to the subfunction 2 circuitry 806 via SWB, and the output circuitry 816 of the repurposing block 8 receives output signals from the subfunction 2 circuitry 806 of the hardware block 8 via SWC. In this case, the subfunction 2 circuitry 806 is isolated and utilized for performing an alternative useful function as determined by the repurposing block 8. The hardware block 8 may be preconfigured with the switch circuitry 112 as shown or may be modified or programmed to redirect input and output signals for isolating the subfunction 2 circuitry 806 as shown. It is appreciated that other subfunction circuitry of the hardware block 8 or other subfunction circuitry of other hardware blocks 110 may be isolated and used in a similar fashion.

It is noted that the processing system 100 shown in FIG. 1 including "N" hardware blocks 1 - N includes 1 or more hardware blocks in which N is 1 or more, in which one or more of the hardware blocks may be repurposed. Also, a repurposing block may or may not be provided depending upon the repurposing function (e.g., a repurposing block might not be needed for memory extension as shown in FIG. 7). In addition, although Figures 2 - 8 show examples of repurposing corresponding hardware blocks 2 - 8, respectively, it is appreciated that the processing system 100 may only include only one of the repurposed functions or less that all of the repurposed functions so that many of the illustrated repurposed functions may not be included for a given implementation.

FIG. 8 illustrates that the switch circuitry 112 may be used to not only isolate or otherwise control input/output signals of a disabled hardware block the communication interface 108, but may also be used to isolate or control signals of subcomponents of the disabled hardware block for use by the processing system 100. FIG. 8 illustrates using the switch circuitry 112 to isolate a subfunction, but the switch circuitry 112 may also be used to isolate other types of subcomponents, such as, for example, memory devices such as the register set 702 shown in FIG. 7 or any other type of subcomponent as may be desired.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A processing system, comprising:
a communication interface;
a processor coupled to the communication interface;
a hardware block coupled to the communication interface and configured to perform a primary function when enabled; and
configuration circuitry configured to selectively disable the hardware block from performing the primary function and to selectively repurpose the hardware block to perform an alternative function that is different from the primary function.

2. The processing system of claim 1, further comprising switch circuitry controlled by the configuration circuitry for selectively decoupling the hardware block from the communication interface.

3. The processing system of claim 1 or 2,
wherein the hardware block comprises at least one memory-mapped register; and
wherein the processor is configured to use the at least one memory-mapped register of the hardware block when the hardware block is disabled from the primary function and repurposed for memory extension.

4. The processing system of any preceding claim, further comprising:
a repurposing block coupled to the communication interface and the hardware block and configured, when enabled by the configuration circuitry, to repurpose the hardware block to perform the alternative function that is different from the primary function.

5. The processing system of claim 4, wherein the repurposing block is configured to periodically provide a selected input value to the input of the hardware block, to receive a corresponding output value from the hardware block, to compare the received output value with a predetermined output value, and to generate an alert when the received output value is not equal to the predetermined output value.

6. The processing system of claim 5, wherein the repurposing block is configured to generate the alert by sending an interrupt to the processor.

7. The processing system of any of claims 4 to 6, further comprising:
a random number generator providing random numbers; and
wherein the repurposing block is configured to redirect the random numbers from the random number generator to an input of the hardware block which processes the random numbers for generating noise.

8. The processing system of any of claims 4 to 6, further comprising:
a random number generator providing random numbers; and
wherein the repurposing block is configured to redirect the random numbers from the random number generator to the hardware block which generates additional random numbers for use by the processor.

9. The processing system of any of claims 4 to 8,
wherein the hardware block comprises subfunction circuitry; and
wherein the repurposing block is configured to provide inputs to the subfunction circuitry and to receive outputs from the subfunction circuitry.

10. The processing system of claim 9, wherein the hardware block further comprises switch circuitry configured to isolate the subfunction circuitry by redirecting the inputs from the repurposing block to the subfunction circuitry and by providing the outputs from the subfunction circuitry to the repurposing block.

11. The processing system of claim 4 to 10, further comprising switch circuitry controlled by the configuration circuitry for selectively redirecting input and output signals between the hardware block and the repurposing block.

12. A method of repurposing a hardware block of a processing system, wherein the processing system includes a communication interface coupled to a processor, and wherein the hardware block is coupled to the communication interface and configured to perform a primary function when enabled, the method comprising:
selectively disabling the hardware block from performing the primary function; and
selectively repurposing the hardware block, when disabled from performing the primary function, to perform an alternative function that is different from the primary function.

13. The method of claim 12, wherein the repurposing comprises using, by the processor, at least one memory-mapped register of the hardware block when the hardware block is disabled from performing the primary function.

14. The method of claim 12 or 13, wherein the repurposing comprises:
periodically providing a selected input value to the input of the hardware block;
receiving an output value from the hardware block that corresponds with the selected input value;
comparing the received output value with a predetermined output value; and
generating an alert to the processor when the received output value is not equal to the predetermined output value.

15. The method of any of claims 12 to 14, wherein the repurposing comprises:
generating noise by redirecting random numbers from a random number generator to an input of the hardware block which processes the random numbers.
